# EUROPEAN PATENT APPLICATION

(11) **EP 2 952 809 A1**
(43) Date of publication of application: **09.12.2015**
(21) Application number: 14171553.2
(22) Date of filing: 06.06.2014
(51) Int. Cl.: F23J 15/00, F23J 15/02, B01D 53/62, B01D 53/96, B01J 8/00

(54) **Steam generator**

(71) Applicant: ALSTOM Technology Ltd, 5400 Baden (CH)
(72) Inventor: Stallmann, Olaf, 55270 Essenheim (DE); Balfe, Michael Charles, 55131 Mainz (DE)
(74) Representative: Alstom Technology Ltd

(57) **Abstract**

The steam generator (1) comprises an enclosure (10) with a fuel supply (11a), an oxidizer supply (11b) and evaporating surfaces (12). Reactors (20) for calcining rich sorbent material provided by a calcination/carbonation loopare integrated in the enclosure (10).

## Description

### TECHNICAL FIELD

The present invention relates to a steam generator.

The steam generator is connected to a carbonator/calciner system for carbon dioxide separation and sequestration. The steam generator with the carbonator/calciner system can be part of a power plant also comprising a steam turbine connected to an electric generator; other applications are anyhow possible such as industrial applications.

### BACKGROUND

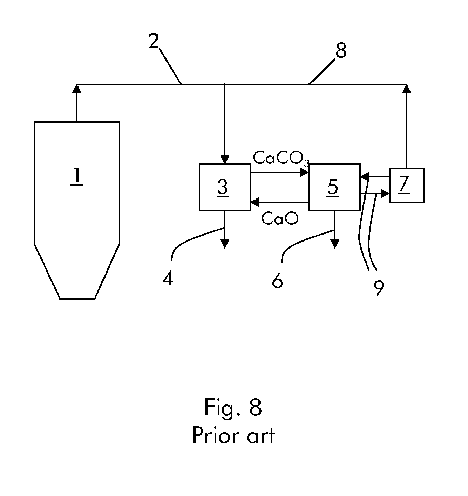

Figure 8 shows a traditional steam generator connected to a carbonator/calciner system for carbon dioxide sequestration.

At the steam generator 1 fuel is combusted for heating a fluid such as water and generating steam. The combustion generates flue gas 2 that is supplied into a carbonator 3.

At the carbonator 3 the carbon dioxide contained in the flue gas is adsorbed by a carbon dioxide lean sorbent; the carbon dioxide lean sorbent often used in these applications is CaO, but other metal alkaline materials are also known and can be used in these applications.

At the carbonator 3 the carbonation reaction

CaO + CO₂ → CaCO₃

takes place at a temperature between 600-750°C; the product of this reaction is a carbon dioxide rich sorbent CaCO₃.

The gas 4 deprived from carbon dioxide is vented from the carbonator 3.

The carbon dioxide rich sorbent CaCO₃ is supplied into a calciner 5 where the calcination (decarbonation) reaction

CaCO₃ → CaO + CO₂

takes place at a temperature between 900-1050°C; the products of this reaction are carbon dioxide lean sorbent CaO that is supplied back to the carbonator 3 and carbon dioxide 6 (CO₂) that can be forwarded to further treatments and/or sequestration.

The calcination reaction is an endothermic reaction that adsorbs a large amount of energy. For this reason, in order to supply energy for the reaction and maintain the reaction temperature at the calciner 5, the calciner 5 is associated with a furnace 7; at the furnace 7 fuel is combusted often with substantially pure oxygen, to generate flue gas 8 that is forwarded to the carbonator 3. Usually, heat is transferred to the calciner 5 by means of an inert (because it does not take part in the combustion) solid material 9 circulating between the furnace 7 and the calciner 5.

This traditional steam generator connected to a carbonator/calciner system requires a number of auxiliary devices for recovering heat from the flue gas 8 coming from the furnace 7. Auxiliary devices can be for example heat exchangers, which are needed for recovering heat from the flue gas 8; the flue gas 8 has a high temperature because the inert solid material 9 supplied from the furnace 7 into the calciner 5 must have a high temperature (between 900-1050°C), such that the temperature of the flue gas 8 discharged from the furnace 7 must be correspondingly high. In addition, at least two combustion systems are needed, namely the furnace 7 and the burners at the boiler 1.

### SUMMARY

An aspect of the invention includes providing a steam generator that does not require a number of or requires less auxiliary devices, such as heat exchangers for recovering heat from the flue gas discharged from the furnace.

Another aspect of the invention includes providing a steam generator by which no additional furnace is needed in order to supply heat to the calciner.

These and further aspects are attained by providing a steam generator in accordance with the accompanying claims.

### BRIEF DESCRIPTION OF THE DRAWINGS

Further characteristics and advantages will be more apparent from the description of a preferred but non-exclusive embodiment of the steam generator, illustrated by way of non-limiting example in the accompanying drawings, in which:

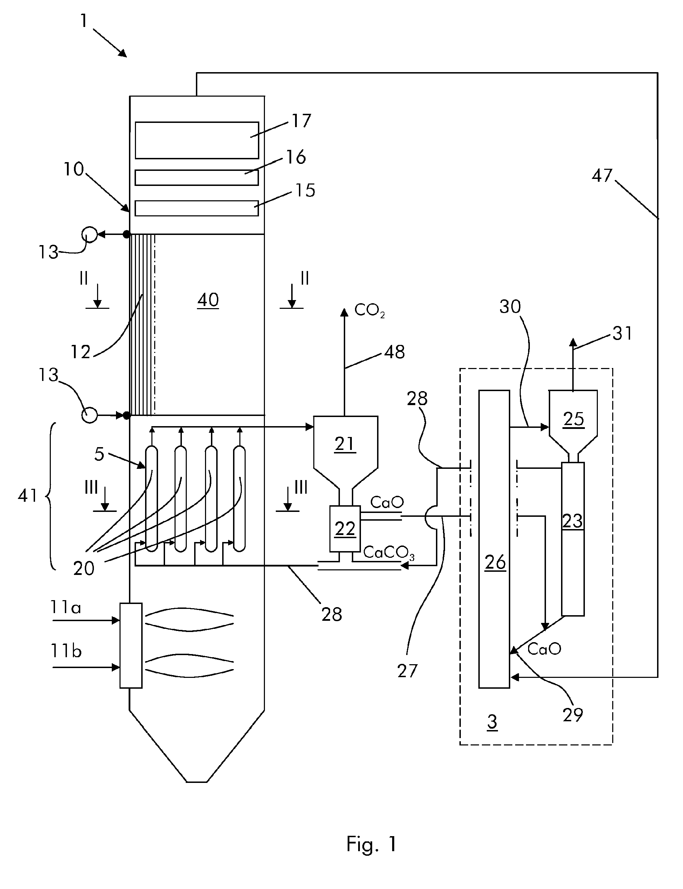

Figure 1 shows a steam generator according to an embodiment of the invention;
Figures 2 and 3 show cross sections through lines II-II and III-III of figure 1;
Figure 4 shows a cross section of an alternative embodiment of the steam generator through a line at the same position as line III-III of figure 1;

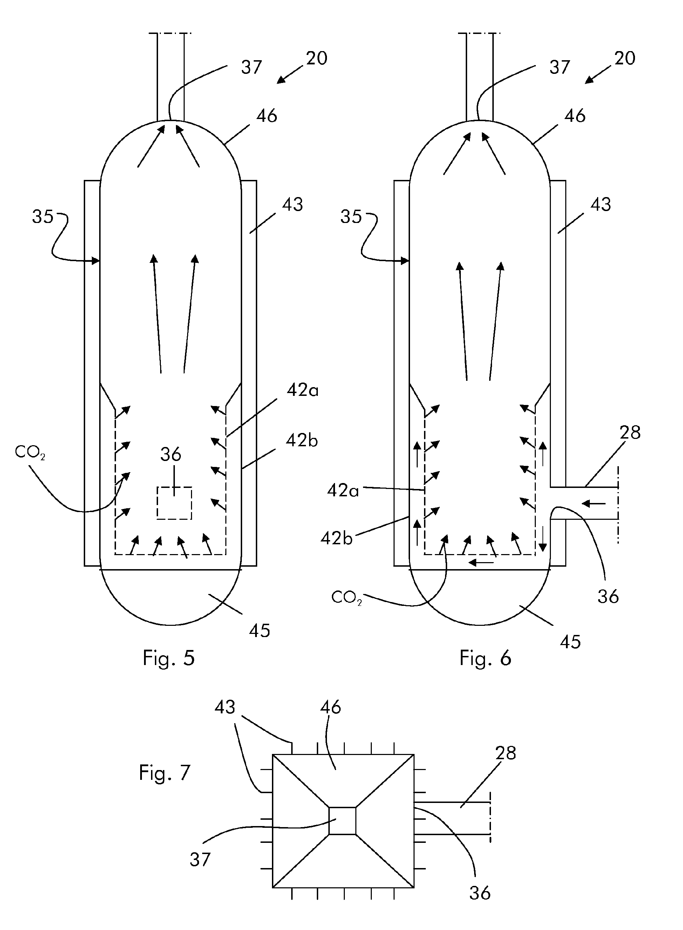

Figures 5 through 7 show a reactor for the calcination reaction respectively in a front view, side view and top view;
Figure 8 shows a steam generator connected to a carbonator/calciner system according to the prior art.

### DETAILED DESCRIPTION OF EXEMPLARY EMBODIMENTS

With reference to the figures, these show a steam generator 1 comprising an enclosure 10 with a fuel supply 11a and an oxidizer supply 11b; the fuel can be coal, oil, gas or other fuels and the oxidizer can be air, oxygen enriched air or substantially pure oxygen etc..

The enclosure 10 has evaporating surfaces 12, such as tubed walls, connected to headers 13 for water entry therein and steam or mixture steam/water exit therefrom. Preferably, the tubed walls define the enclosure.

The steam generator 1 also has a superheater 15, a reheater 16 and an economizer 17; these components are housed in a flue gas duct downstream of the evaporating surfaces 12 with respect to the flue gas flow.

The steam generator 1, also comprises one or preferably more than one reactors 20 for calcining a carbonated material and integrated in the enclosure 10; the reactors define the calciner 5.

The carbonated material (carbon dioxide rich sorbent) can be CaCO₃ and the decarbonated material (carbon dioxide lean sorbent) can consequently be CaO; these materials can be used to adsorb carbon dioxide CO₂ in a carbonation/calcination loop; other alkaline metals are anyhow known in the art for the same use and can be used as well in place of the CaO/CaCO₃. In the following reference to CaO and CaCO₃ is made in place of CO₂ lean and CO₂ rich sorbent, respectively, it is anyhow clear that the invention is not limited to the use of these materials.

The fuel supply 11a and oxidizer supply 11b are provided at a lower part of the enclosure 10, the evaporating surfaces 12 are provided at an upper part of the enclosure 10 and the reactors 20 are provided at an intermediate part of the enclosure 12, between the lower part and the upper part. This scheme allows high temperature flue gas generation at the lower part of the enclosure 12, this is advantageous because flue gas naturally tends to move upwards; high temperature flue gas can thus heat the reactors 20, where high temperature heat is needed; downstream of the reactors 20 the flue gas still has a high temperature (up to 900°C or also more) and can thus be used for heating the evaporating surfaces 12.

Preferably the lowest part of the evaporating surfaces 12 is higher than the highest part of the reactor 20, i.e. there is no overlapping. With this configuration, the flue gas can heat the reactors 20 and provide them with high temperature heat, without the heat being removed by the evaporating surfaces 12.

The lower part of the enclosure 10 is thermally insulated; preferably the lower part of the enclosure 10 is also mechanically protected. This allows an adiabatic combustion, i.e. combustion without (or with limited) heat transfer; the flue gas generated this way has a very high temperature, because no heat (or only limited amount of heat) is transferred during combustion.

The reactors 20 are connected to a separator 21, such as a cyclone. The cyclone 21 separates carbon dioxide from calcium oxide CaO generated in the reactors 20 and possible amounts of calcium carbonate CaCO₃ discharged from the reactors 20 for incomplete reaction.

The cyclone 21 is connected to the carbonator 3 and to the reactors 20. A device 22 is advantageously used to control the split flow of sorbent between alternative routes to the reactors 20 or to the carbonator 3 and also functions to prevent back flow.

The carbonator 3 is of traditional type and for example it includes a separator 25, such as a cyclone, and a reactor 26. The cyclone 25 is equipped with a device 23 to control the split flow of sorbent between alternative routes to the reactors 20 or to the reactor 26 and also functions to prevent back flow. Rich sorbent leaving the device 22 flows to the reactor 26 of the carbonator 3 via a line 27 and may also connect to a line 29 from the device 23 on route. Lean sorbent leaving the device 23 flows to the reactors 20 via a line 28 and may also connect to the device 22 which may recycle carbon dioxide rich sorbent CaCO₃ to the reactors 20.

In addition, the cyclone 25 is connected to the reactor 26 via a line 30, for receiving calcium carbonate CaCO₃ and possibly calcium oxide CaO that did not react in the reactor 26.

The cyclone 25 is also provided with a line 31 for discharging flue gas deprived from carbon dioxide CO₂.

The reactors 20 have a vessel 35 having an elongated shape, with a square cross section (but also other cross sections are possible such as circular), and extending substantially vertically.

Each vessel 35 has an inlet 36 and an outlet 37; the inlet 36 is at the lower part of the vessel 35, and the outlet 37 is at an upper part of the vessel 35.

The inlet 36 of the vessel 35 is connected to the line 28 for receiving calcium oxide CaO; also carbon dioxide CO₂ is supplied via the line 28 into the vessels 35.

The outlet 37 of the vessel 35 is connected to the cyclone 21, for separating the calcium oxide CaO from carbon dioxide CO₂.

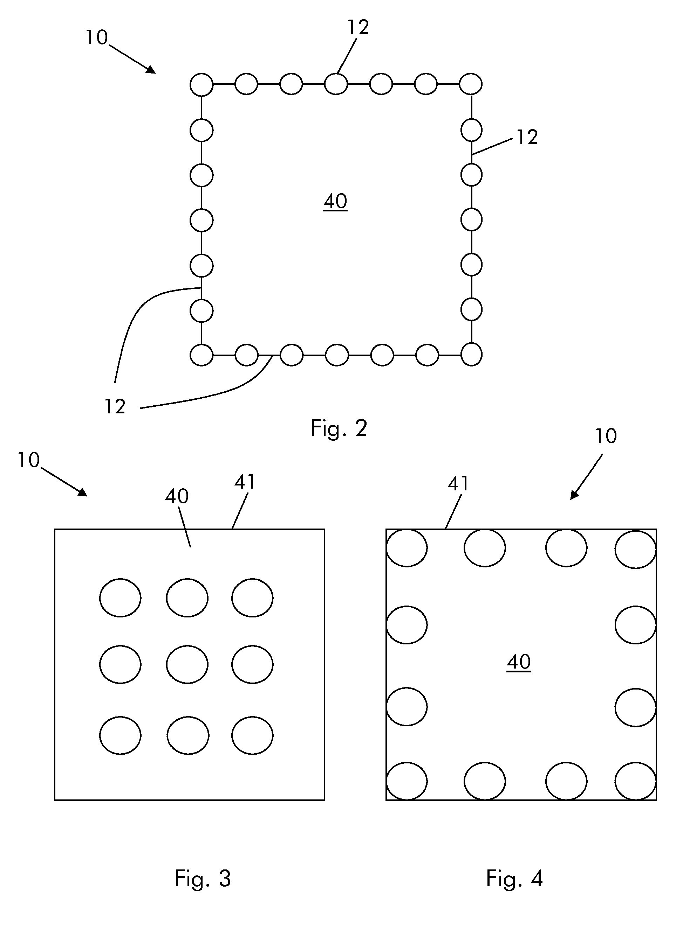

The enclosure 10 defines an inner space 40 and the reactors 20 are housed within the inner space 40 (figure 3); in this case the intermediate part 41 of the enclosure (this part encloses the reactors 20) can be made of refractory material.

Alternatively, the reactors 20 can define the intermediate part 41 of the enclosure 10 or a section of it (figure 4). Naturally also combinations of the examples shown in figures 3 and 4 are possible, with the reactors 20 defining at least a part 41 of the enclosure 10 and in addition also housed within the enclosure 10.

The vessels 35 have, at their lower part, a double wall structure 42a, 42b (reference 42a indicates an internally facing wall and reference 42b indicates an externally facing wall); the internally facing wall 42a of the double wall structure is perforated.

In addition, the vessels 35 also have heat exchanging fins 43 extending therefrom, to improve heat exchange.

The bottom 45 of the vessel 35 has a curved shape for promoting gas circulation around the vessel and is preferably made of refractory material.

Likewise, also the head 46 of the vessels 35 has a curved shape for promoting gas circulation around the vessels; in this case since the heads 46 do not face the flame and are surrounded by flue gas that has already exchanged heat, no need of refractory material exists; refractory material can anyhow be provided if it is needed.

The operation of the steam generator is apparent from that described and illustrated and is substantially the following.

Fuel (e.g. oil, gas, coal, etc.) and oxidizer (e.g. air, oxygen, oxygen enriched air) are supplied at the bottom of the enclosure 10 and are combusted generating high temperature flue gas. The bottom of the vessels 35 is provided with an insulating covering (refractory material), such that the flame and the flue gas exchange only limited amount of heat.

The high temperature flue gas moves upwards and, while passing through the vessels 35, flue gas transfers high temperature heat to the vessels 35; this high temperature heat promotes the calcination reaction.

Downstream of the vessels 35 the flue gas passes through the evaporating surfaces 12 where steam is generated, and then through the superheater 15, reheater 16 and economizer 17.

The flue gas is then supplied to the carbonator 3 (namely into the reactor 26) via the line 47; at the carbonator 3 the flue gas reacts with calcium oxide CaO according to the carbonation reaction

CaO + CO₂ → CaCO₃

at a temperature between 600-750°C; this is an exothermic reaction.

From the reactor 26, via the line 30, flue gas deprived from carbon dioxide CO₂ and calcium carbonate CaCO₃ are forwarded to the cyclone 25; flue gas deprived from carbon dioxide is vented or forwarded to other applications via the line 31, calcium carbonate CaCO₃ and carbon dioxide CO₂ are supplied to the reactors 20 of the calciner 5 via the line 28. Calcium oxide CaO that possibly did not react is forwarded back to the reactor 26 via the line 29.

Calcium carbonate CaCO₃ and carbon dioxide CO₂ enter the vessel 35 via the inlet 36; in particular, the calcium carbonate CaCO₃ and carbon dioxide CO₂ enter the vessel 35 between the walls 42a and 42b, cool the wall 42b and pass through the perforations of the wall 42a to then move upwards. Calcium carbonate CaCO₃ moves upwards in the vessel 35 dragged by the carbon dioxide CO₂.

While moving upwards, calcium carbonate CaCO₃ undergoes the calcination (decarbonation) reaction

CaCO₃ → CaO + CO₂

at a temperature between 900-1050°C; this is an endothermic reaction.

From the outlet 37 of the vessel 35 calcium oxide CaO and carbon dioxide CO₂ are supplied to the cyclone 21.

The cyclone 21 separates the carbon dioxide CO₂ from the calcium oxide CaO and forwards carbon dioxide CO₂ to further treatments or sequestration via the line 48; calcium oxide CaO is forwarded to the carbonator 3 (namely to the separator 25). Calcium carbonate CaCO₃ that did not react in the vessels 35 is forwarded to the line 28 and from here again into the vessels 35.

Naturally the features described may be independently provided from one another.

In practice the materials used and the dimensions can be chosen at will according to requirements and to the state of the art.

### REFERENCE NUMBERS

- 1: steam generator
- 2: flue gas
- 3: carbonator
- 4: gas deprived from carbon dioxide
- 5: calciner
- 6: carbon dioxide
- 7: furnace
- 8: flue gas
- 9: inert solid material
- 10: enclosure
- 11a: fuel supply
- 11b: oxidizer supply
- 12: evaporating surfaces
- 13: headers
- 15: superheater
- 16: reheater
- 17: economizer
- 20: calciner reactors
- 21: separator
- 22: flow and backflow control device for 21
- 23: flow and backflow control device for 25
- 25: separator
- 26: carbonator reactor
- 27: Lime draw off line from calciner to carbonator
- 28: Limestone feed line to calciner
- 29: Carbonator Recirculation line
- 30: line
- 31: line
- 35: vessel
- 36: inlet
- 37: outlet
- 40: inner space of 10
- 41: intermediate part
- 42a: internally facing wall
- 42b: externally facing wall
- 43: fin
- 45: bottom
- 46: head
- 47: line
- 48: line

## Claims

1. A steam generator (1) comprising an enclosure (10) with at least a fuel supply (11a), an oxidizer supply (11b) and evaporating surfaces (12), **characterised by** further comprising at least a reactor (20) for calcining a carbonated material integrated in the enclosure (10).

2. The steam generator (1) of claim 1, **characterised in that** the at least a fuel supply (11a) and oxidizer supply (11b) are provided at a lower part of the enclosure (10), the evaporating surfaces (12) are provided at an upper part of the enclosure (10) and the at least a reactor (20) is provided at an intermediate part (41) of the enclosure (10) between the lower part and the upper part.

3. The steam generator (1) of claim 1, **characterised in that** the lowest part of the evaporating surfaces (12) is higher than the highest part of the at least a reactor (20).

4. The steam generator (1) of claim 1, **characterised in that** the lower part of the enclosure (10) is thermally insulated.

5. The steam generator (1) of claim 1, **characterised in that** the at least a reactor (20) has a vessel (35) with an elongated shape, wherein the vessel (35) extends substantially vertically.

6. The steam generator (1) of claim 1, **characterised in that** the vessel (35) has an inlet (36) and an outlet (37), the inlet (36) being at the lower part of the vessel (35), and the outlet (37) being at an upper part of the vessel (35).

7. The steam generator (1) of claim 6, **characterised in that** the outlet (37) is connected to a separator (21), for separating a carbon dioxide lean sorbent (CaO) from carbon dioxide (CO₂).

8. The steam generator (1) of claim 1, **characterised in that** the enclosure (10) defines an inner space (40), the at least a reactor (20) being housed within the inner space (40).

9. The steam generator (1) of claim 2, **characterised in that** the at least a reactor (20) defines the intermediate part (41) of the enclosure (10) or a section of it.

10. The steam generator (1) of claim 1, **characterised in that** the at least a reactor (20) has a vessel (35), at least a lower part of the vessel (35) having a double wall structure, an internally facing wall (42a) of the double wall structure being perforated.

11. The steam generator (1) of claim 1, **characterised in that** the at least a reactor (20) has a vessel (35) with heat exchanging fins (43) extending therefrom.

12. The steam generator (1) of claim 5, **characterised in that** the bottom (45) of the vessel (35) has a curved shape for promoting gas circulation around the vessel (35).

13. The steam generator (1) of claim 5, **characterised in that** the head (46) of the vessel (35) has a curved shape for promoting gas circulation around the vessel (35).
